# EUROPÄISCHE PATENTANMELDUNG

(11) **EP 3 219 944 A1**
(43) Veröffentlichungstag der Anmeldung: **20.09.2017**
(21) Anmeldenummer: 17159101.9
(22) Anmeldetag: 03.03.2017
(51) Int. Cl.: F01L 1/352, F16H 1/32

(54) **VORRICHTUNG ZUR PHASENVERSCHIEBUNG EINES DREHWINKELS EINES ANTRIEBSTEILS ZU EINEM ABTRIEBSTEIL**

(30) Priorität: 09.03.2016 DE 102016104287
(71) Anmelder: Pierburg GmbH, 41460 Neuss (DE)
(72) Erfinder: Dr. Tönnesmann, Andres, 52066 Aachen (DE); Dr. Krebber-Hortmann, Karl, 40221 Düsseldorf (DE); Zielberg, Stephan, 44866 Bochum (DE); Köster, Andreas, 45149 Essen (DE); Brunetti, Costantino, 58730 Fröndenberg (DE); Sansone, Manuel, 40479 Düsseldorf (DE)
(74) Vertreter: Patentanwälte ter Smitten Eberlein-Van Hoof Rütten Partnerschaftsgesellschaft mbB

(57) **Zusammenfassung**

Vorrichtungen zur Phasenverschiebung eines Drehwinkels eines Antriebsteils zu einem Abtriebsteil mit einer ersten Zahnradpaarung (20), welche ein außenverzahntes erstes Zahnrad (16) und ein innenverzahntes erstes Hohlrad (18) umfasst, wobei das außenverzahnte erste Zahnrad (16) mit dem Antriebsteil (2) drehfest verbunden ist, einer zweiten Zahnradpaarung (26), welche ein außenverzahntes zweites Zahnrad (24) und ein innenverzahntes zweites Hohlrad (22) umfasst, wobei das außenverzahnte zweite Zahnrad (24) mit dem Abtriebsteil (4) drehfest verbunden ist, und wobei das Übersetzungsverhältnis der zweiten Zahnradpaarung (26) sich von dem Übersetzungsverhältnis der ersten Zahnradpaarung (20) unterscheidet, und einem Außenexzenter (28), in dem die beiden fest miteinander verbundenen innenverzahnten Hohlräder (18, 22) drehbar gelagert sind, sind bekannt.

Um mit solchen Vorrichtungen hohe Drehmomente übertragen zu können und dabei eine hohe Lebensdauer sicherzustellen, wird vorgeschlagen, dass das innenverzahnte erste Hohlrad (18) über ein erstes Lager (30) und das innenverzahnte zweite Hohlrad (22) über ein zweites Lager (32) im Außenexzenter (28) gelagert sind.

## Beschreibung

Die Erfindung betrifft eine Vorrichtung zur Phasenverschiebung eines Drehwinkels eines Antriebsteils zu einem Abtriebsteil mit einer ersten Zahnradpaarung, welche ein außenverzahntes erstes Zahnrad und ein innenverzahntes erstes Hohlrad umfasst, wobei das außenverzahnte erste Zahnrad mit dem Antriebsteil drehfest verbunden ist, einer zweiten Zahnradpaarung, welche ein außenverzahntes zweites Zahnrad und ein innenverzahntes zweites Hohlrad umfasst, wobei das außenverzahnte zweite Zahnrad mit dem Abtriebsteil drehfest verbunden ist, und wobei das Übersetzungsverhältnis der zweiten Zahnradpaarung sich von dem Übersetzungsverhältnis der ersten Zahnradpaarung unterscheidet, und einem Außenexzenter, in dem die beiden fest miteinander verbundenen innenverzahnten Hohlräder drehbar gelagert sind.

Derartige Vorrichtungen sind insbesondere zur Phasenverschiebung zwischen einer Kurbelwelle und einer Nockenwelle bekannt. Die Phasenverschiebung dient zur Steuerung der Öffnungs- und Schließzeitpunkte der Einlass- und Auslassventile, wodurch der Ladungswechselprozess verbessert wird. Als besonders vorteilhaft für die Phasenverschiebung zwischen der Kurbelwelle und Nockenwelle haben sich Exzentergetriebe herausgestellt. Die Phasenverschiebung erfolgt dabei über die Wahl der Geschwindigkeit des Exzenters, welcher üblicherweise über einen elektrisch betätigten Aktor angetrieben wird. So läuft der Exzenter bei einer Phasenverschiebung nicht mit der Geschwindigkeit des durch die Kurbelwelle angetriebenen Antriebsteils um, sondern mit einer veränderten Geschwindigkeit. Die Phasenverschiebung kann dabei in beide Drehrichtungen erfolgen, indem der Exzenter schneller oder langsamer als das Antriebsteil gedreht wird. Eine derartige Vorrichtung zur Phasenverschiebung zwischen der Kurbelwelle und der Nockenwelle ist aus der DE 41 33 408 A1 bekannt. Die Vorrichtung weist ein durch die Kurbelwelle angetriebenes Antriebsteil, ein mit der Nockenwelle fest verbundenes Abtriebsteil und ein Exzentergetriebe auf. Das Exzentergetriebe umfasst einen Außenexzenter, der über zwei Rollenlager auf dem Abtriebsteil drehbar gelagert ist. In dem Außenexzenter sind zwei innenverzahnte Hohlräder über ein Rollenlager drehbar gelagert, wobei das Rollenlager die Belastungen aus beiden innenverzahnten Hohlrädern aufnimmt. Die beiden im Außenexzenter gelagerten innenverzahnten Hohlräder sind mit jeweils einem außenverzahnten Zahnrad in Eingriff, wobei ein außenverzahntes erstes Zahnrad mit dem Antriebsteil und ein außenverzahntes zweites Zahnrad mit dem Abtriebsteil fest verbunden sind.

Nachteilig an einer derartigen Vorrichtung ist die Lagerung der beiden innenverzahnten Hohlräder. Die zu übertragenden Drehmomente erzeugen hohe radiale Belastungen sowie hohe Kippmomente, die von den Lagern aufgenommen werden müssen. Die in der DE 41 33 408 offenbarte Lagerung der beiden Hohlräder kann die hohen radialen Belastungen und Kippmomente nur bedingt ertragen, wodurch die Lebensdauer der Vorrichtung abgesenkt wird bzw. die Einsetzbarkeit einer derartigen Vorrichtung eingeschränkt wird.

Der Erfindung liegt daher die Aufgabe zugrunde, eine Vorrichtung zur Phasenverschiebung des Drehwinkels eines Antriebsteils zu einem Abtriebsteil bereitzustellen, welche eine lange Lebensdauer aufweist und hohe Drehmomente übertragen kann. Desweiteren soll die Vorrichtung bauraumsparend ausgeführt sein sowie kostengünstig herstellbar und montierbar sein.

Diese Aufgabe wird durch eine Vorrichtung zur Phasenverschiebung des Drehwinkels eines Antriebsteils zu einem Abtriebsteil mit den Merkmalen des Hauptanspruchs gelöst. Dadurch, dass das innenverzahnte erste Hohlrad über ein erstes Lager und das innenverzahnte zweite Hohlrad über ein zweites Lager im Außenexzenter gelagert sind, wird erreicht, dass die aus den Zahnradpaarungen entstehenden Belastungen auf zwei Lager verteilt werden und dadurch eine lange Lebensdauer der Vorrichtung bei hohen zu übertragenden Drehmomenten ermöglichen.

Vorzugsweise sind die Zahnbreitenmitte der ersten Zahnradpaarung und die Zahnbreitenmitte der zweiten Zahnradpaarung axial zwischen der Radialebene des ersten Lagers und der Radialebene des zweiten Lagers angeordnet, wodurch die aus den beiden Zahnradpaarungen ausgehenden und auf die Lager wirkenden Kippmomente axial beidseitig der Kraftangriffspunkte aufgenommen werden können. Dabei ist die Radialebene eines Lagers die Vertikalebene, die durch die Mittelpunkte aller Wälzkörper verläuft.

Vorzugsweise sind alle Kontaktpunkte zwischen den außenverzahnten Zahnrädern und den innenverzahnten Hohlrädern der ersten Zahnradpaarung und der zweiten Zahnradpaarung axial zwischen der Radialebene des ersten Lagers und der Radialebene des zweiten Lagers angeordnet, wodurch die auf die Lager wirkende Kippmomente besonders gut aufgenommen werden können, indem der Abstand zwischen dem ersten und zweiten Lager vergrößert wird.

In einer bevorzugten Ausgestaltung der Vorrichtung ist der Außenexzenter über ein drittes Lager und ein viertes Lager im Antriebsteil gelagert. Auf diese Weise kann der axiale Bauraum reduziert werden.

In einer vorteilhaften Ausgestaltung sind die Zahnbreitenmitte der ersten Zahnradpaarung und die Zahnbreitenmitte der zweiten Zahnradpaarung axial zwischen der Radialebene des dritten Lagers und der Radialebene des vierten Lagers angeordnet. So können die aus den beiden Zahnradpaarungen und der Lagerung des Außenexzenters resultierenden Kippmomente besser von den Lagern aufgenommen werden.

Vorzugsweise sind alle Kontaktpunkte zwischen den außenverzahnten Zahnrädern und den innenverzahnten Hohlrädern der ersten Zahnradpaarung und der zweiten Zahnradpaarung axial zwischen der Radialebene des dritten Lagers und der Radialebene des vierten Lagers angeordnet. Durch eine derartige Anordnung der beiden Lager können die aus den beiden Zahnradpaarungen und aus der Lagerung des Außenexzenters resultierenden Kippmomente besonders gut aufgenommen werden, indem der Lagerabstand vergrößert wird.

Vorzugsweise ist der Außenexzenter zweiteilig ausgeführt, wobei ein Innenelement exzentrisch in einem Außenelement angeordnet ist. Dadurch kann ein Außenexzenter auf eine kostengünstige und einfache Weise hergestellt werden, indem der Außenexzenter aus zwei einfachen und kostengünstig herstellbaren Bauteilen zusammengesetzt wird.

In einer vorteilhaften Ausgestaltung ist zwischen dem Innenelement und dem Außenelement ein Federelement angeordnet. Dadurch werden das Spiel zwischen dem Zahnrad und dem Hohlrad innerhalb einer Zahnradpaarung sowie das Lagerspiel der Lager auf eine kosten- und bauraumsparende Weise ausgeglichen. Außerdem wird dadurch eine Dämpfung der Verzahnung ermöglicht, wodurch der durch das Exzentergetriebe erzeugten Geräuschpegel gesenkt wird.

Vorzugsweise ist das Federelement axial zwischen dem ersten Lager und dem zweiten Lager angeordnet. Auf diese Weise wirkt die aus dem Federelement resultierende Federkraft gleichmäßig auf beide Lager und beide innenverzahnte Hohlräder.

In einer vorteilhaften Ausgestaltung ist das Federelement axial zwischen dem dritten Lager und dem vierten Lager angeordnet. So wirkt die Federkraft gleichmäßig auf beide Lager.

In einer bevorzugten Ausgestaltung weist das Außenelement Aufnahmemittel zur Kopplung eines Aktors auf, wodurch keine zusätzlichen Bauteile benötigt werden, um den Aktor mit dem Außenexzenter zu verbinden.

In einer vorteilhaften Ausgestaltung weist das Antriebsteil eine der Nockenwelle zugerichtete erste Gleitfläche auf, über die das Antriebsteil auf einem an der Nockenwelle ausgebildeten axial erstreckenden ringförmigen Vorsprung gelagert ist. Dadurch wird eine kostengünstige und bauraumsparende Lagerung des Antriebsteils an der Nockenwelle ermöglicht, wobei insbesondere die durch den Kettentrieb erzeugten radialen Belastungen besser aufgenommen werden können.

Vorzugsweise weist das Antriebsteil eine dem Abtriebsteil zugerichtete zweite Gleitfläche aufweist, über die das Antriebsteil auf dem Abtriebsteil gelagert ist. Auf diese Weise kann das Antriebsteil bauraumsparend und kostengünstig am Abtriebsteil gelagert werden.

In einer vorteilhaften Ausgestaltung sind das Abtriebsteil und das außenverzahnte zweite Zahnrad einteilig hergestellt. Dadurch wird der Montageaufwand reduziert.

Vorzugsweise weist das Antriebsteil eine ringförmige Außenwand und eine daran anschließende radial erstreckende Wand auf, wobei am inneren radialen Ende der radial erstreckenden Wand das außenverzahnte erste Zahnrad der radial erstreckenden Wand axial gegenüber liegt und das außenverzahnte erste Zahnrad mit dem Antriebsteil formschlüssig verbunden ist. Auf diese Weise kann das außenverzahnte erste Zahnrad kostengünstig mit dem Antriebsteil verbunden werden.

Es wird somit eine Vorrichtung geschaffen, welche eine Phasenverschiebung zwischen der Kurbelwelle und der Nockenwelle bewirkt, wobei hohe Drehmomente übertragen werden könnten, ohne dass die Lebensdauer der Vorrichtung durch die Lebensdauer der Lager eingeschränkt wird.

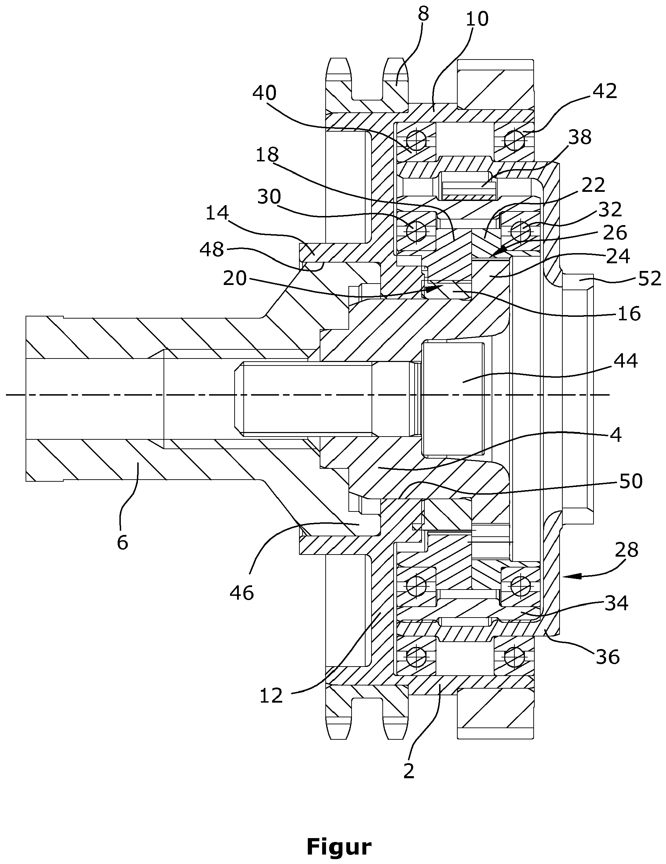

Die Figur zeigt eine erfindungsgemäße Ausführung einer Vorrichtung zur Phasenverschiebung des Drehwinkels eines Antriebsteils zu einem Abtriebsteil in Seitenansicht und geschnittener Darstellung.

Die erfindungsgemäße und in der Figur dargestellte Vorrichtung zur Phasenverschiebung eines Antriebsteils 2 zu einem Abtriebsteil 4 umfasst ein an einer Nockenwelle 6 gelagertes Antriebsteil 2, an dem ein Kettenrad 8 angeordnet ist. An das Kettenrad 8 greift ein nicht dargestellter Kettentrieb an, der die Drehbewegung einer nicht dargestellten Kurbelwelle an das Antriebsteil 2 überträgt. Das Antriebsteil 2 setzt sich aus einer ringförmigen Außenwand 10 und einer radial erstreckenden Wand 12 zusammen, wobei die radial erstreckende Wand 12 an einem axialen Ende der ringförmigen Außenwand 10 angeordnet ist und einen der Nockenwelle 6 entgegengerichteten ringförmigen Vorsprung 14 aufweist. An das äußere radiale Ende der radial erstreckenden Wand 12 schließt ein als Antriebszahnrad dienendes außenverzahntes erstes Zahnrad 16 axial an, welches beispielsweise formschlüssig mit der radial erstreckenden Wand 12 verbunden ist. Dieses außenverzahnte erste Zahnrad 16 greift in ein innenverzahntes erstes Hohlrad 18, welches zusammen mit einem innenverzahnten zweiten Hohlrad 22 in einem Außenexzenter 28 drehbar gelagert ist.

Der Außenexzenter 28 ist zweiteilig ausgeführt und umfasst ein ringförmiges Innenelement 34 und ein Außenelement 36, wobei das Innenelement 34 exzentrisch im Außenelement 36 gelagert ist. Zwischen dem Innenelement 34 und dem Außenelement 36 ist ein Federelement 38 angeordnet, welches beispielsweise eine Bandfeder ist, und das Innenelement 34 und das Außenelement 36 gegeneinander in radiale Richtung belastet.

Die Lagerung der beiden Hohlräder 18, 22 im Außenexzenter 28 erfolgt erfindungsgemäß über ein erstes Lager 30 und ein zweites Lager 32, welche beispielsweise als Rillenkugellager ausgeführt sind und radial zwischen den beiden Hohlrädern 18, 22 und dem Innenelement 34 des Außenexzenter 28 angeordnet sind. Hierbei weisen die beiden miteinander verbundenen Hohlräder 18, 22 an jeweils einem axialen Ende einen Absatz auf, durch die das erste Lager 30 und das zweite Lager 32 aufgenommen werden, sodass das erste Lager 30 an einem axialen Ende und das zweite Lager 32 an dem entgegengesetzten axialen Ende der verbundenen Hohlräder 18, 22 angeordnet sind. Auf diese Weise sind die Verzahnungen der beiden Hohlräder 18, 22 axial zwischen den beiden Lagern 30, 32 angeordnet. Zusätzlich wird durch die Absätze der radiale Bauraum verringert, indem die Lager 30, 32 in die Hohlräder 18, 22 zumindest teilweise integriert werden. Der Außenexzenter 28 wird über ein drittes Lager 40 und über ein viertes Lager 42 im Außenelement 36 gelagert, sodass die beiden Lager 40, 42 radial zwischen dem Außenelement 36 und der ringförmigen Außenwand 10 des Antriebsteils 2 angeordnet sind. Dabei liegt das dritte Lager 40 nahezu in einer Radialebene mit dem ersten Lager 30. In gleicher Weise liegt das vierte Lager 42 in nahezu einer Radialebene mit dem zweiten Lager 42.

Die Lager 30, 32, 40, 42 werden über das zwischen dem Innenelement 34 und dem Außenelement 36 angeordnete Federelement 38 radial belastet und vorgespannt. Zusätzlich bewirkt das Federelement 38 eine Vorspannung und Dämpfung der Verzahnungen zwischen dem innenverzahnten ersten Hohlrad 18 und dem außenverzahnten ersten Zahnrad 16 sowie zwischen dem innenverzahnten zweiten Hohlrad 22 und einem außenverzahnten zweiten Zahnrad 24, welches mit dem innenverzahnten zweiten Hohlrad 22 in Eingriff steht und am Antriebsteil 4 ausgebildet ist.

Das Abtriebsteil 4 ist über eine Schraube 44 mit der Nockenwelle 6 fest verbunden. Die Nockenwelle 6 weist zur Lagerung des Antriebsteils 2 einen axial erstreckenden ringförmigen Vorsprung 46 auf, auf dessen Außenfläche eine erste Gleitfläche 48 anliegt, die durch die Innenfläche des ringförmigen Vorsprungs 14 gebildet wird. Eine zusätzliche Lagerung des Antriebsteils 2 erfolgt über eine zweite Gleitfläche 50, welche durch das der ringförmigen Außenwand 10 entgegengesetzte radiale Ende der radial erstreckenden Wand 12 gebildet wird und am Abtriebsteil 4 anliegt.

Im Betrieb wird das Kettenrad 8 über einen Kettentrieb angetrieben, wodurch das Antriebsteil 2 gedreht wird. Gleichzeitig wird der Außenexzenter 28 durch einen Aktor, der über am Außenelement 36 ausgebildete Aufnahmemittel 52 mit dem Außenelement 36 verbunden ist, gedreht. Entspricht die Geschwindigkeit des Außenexzenters 28 der Geschwindigkeit des Antriebsteils 2, so dreht sich die gesamte Vorrichtung als Ganzes. Dabei drehen sich der Außenexzenter 28, die beiden außenverzahnten Zahnräder 16, 24, die beiden innenverzahnten Hohlräder 18, 22 das Antriebsteil 2 und das Abtriebsteil 4 mit der gleichen Winkelgeschwindigkeit. Bei einer Phasenverschiebung weicht die Winkelgeschwindigkeit des Aktors von der Winkelgeschwindigkeit des Antriebsteils 2 ab. Dabei führen die beiden innenverzahnten Hohlräder 18, 22 aufgrund der exzentrischen Lagerung eine Bewegung relativ zu den beiden außenverzahnten Zahnräder 16, 24 aus, wodurch die Winkelgeschwindigkeit des Abtriebsteils 4 verändert wird. Auf diese Weise kann die Phasenverschiebung abhängig von der Außenexzentergeschwindigkeit in zwei unterschiedliche Drehrichtungen erfolgen, sodass beispielsweise der Einlasszeitpunkt zu einem späteren oder zu einem früheren Zeitpunkt verschoben wird.

Die beschriebene Vorrichtung zur Phasenverschiebung zeichnet sich durch eine belastungsfähige Lagerung der Hohlräder 18, 22 und des Außenexzenters 28 aus. Diese Lagerung führt dazu, dass hohe Radialkräfte und insbesondere hohe Kippmomente von den Lagern 30, 32, 40, 42 aufgenommen werden können, wodurch die Lebensdauer der Vorrichtung erhöht wird. Gleichzeitig führt die beschriebene Lageranordnung zu einem geringeren axialen Bauraum. So wird eine kleinbauende Vorrichtung zur Phasenverschiebung mit hohen übertragbaren Drehmomenten und einer langen Lebensdauer geschaffen.

Es sollte deutlich sein, dass auch andere konstruktive Ausführungsformen im Vergleich zur beschriebenen Ausführungsform möglich sind, ohne den Schutzbereich des Hauptanspruchs zu verlassen. Es können beispielsweise das Antriebs- oder das Abtriebsteil anders ausgeführt sein oder für die Lager eine von der beschriebenen Ausführung abweichende Lager-Bauform gewählt werden.

## Patentansprüche

1. Vorrichtung zur Phasenverschiebung eines Drehwinkels eines Antriebsteils zu einem Abtriebsteil mit
einer ersten Zahnradpaarung (20), welche ein außenverzahntes erstes Zahnrad (16) und ein innenverzahntes erstes Hohlrad (18) umfasst, wobei das außenverzahnte erste Zahnrad (16) mit dem Antriebsteil (2) drehfest verbunden ist,
einer zweiten Zahnradpaarung (26), welche ein außenverzahntes zweites Zahnrad (24) und ein innenverzahntes zweites Hohlrad (22) umfasst, wobei das außenverzahnte zweite Zahnrad (24) mit dem Abtriebsteil (4) drehfest verbunden ist, und wobei das Übersetzungsverhältnis der zweiten Zahnradpaarung (26) sich von dem Übersetzungsverhältnis der ersten Zahnradpaarung (20) unterscheidet, und
einem Außenexzenter (28), in dem die beiden fest miteinander verbundenen innenverzahnten Hohlräder (18, 22) drehbar gelagert sind,
**dadurch gekennzeichnet, dass**
das innenverzahnte erste Hohlrad (18) über ein erstes Lager (30) und das innenverzahnte zweite Hohlrad (22) über ein zweites Lager (32) im Außenexzenter (28) gelagert sind.

2. Vorrichtung zur Phasenverschiebung des Drehwinkels eines Antriebsteils zu einem Abtriebsteil nach Anspruch 1,
**dadurch gekennzeichnet, dass**
die Zahnbreitenmitte der ersten Zahnradpaarung (20) und die Zahnbreitenmitte der zweiten Zahnradpaarung (26) axial zwischen der Radialebene des ersten Lagers (30) und der Radialebene des zweiten Lagers (32) angeordnet sind.

3. Vorrichtung zur Phasenverschiebung des Drehwinkels eines Antriebsteils zu einem Abtriebsteil nach Anspruch 1 oder 2, **dadurch gekennzeichnet, dass**
alle Kontaktpunkte zwischen den außenverzahnten Zahnrädern (16, 24) und den innenverzahnten Hohlrädern (18, 22) der ersten Zahnradpaarung (20) und der zweiten Zahnradpaarung (26) axial zwischen der Radialebene des ersten Lagers (30) und der Radialebene des zweiten Lagers (32) angeordnet sind.

4. Vorrichtung zur Phasenverschiebung des Drehwinkels eines Antriebsteils zu einem Abtriebsteil nach einem der vorangegangenen Ansprüche,
**dadurch gekennzeichnet, dass**
der Außenexzenter (28) über ein drittes Lager (40) und ein viertes Lager (42) im Antriebsteil (2) gelagert ist.

5. Vorrichtung zur Phasenverschiebung des Drehwinkels eines Antriebsteils zu einem Abtriebsteil nach Anspruch 4,
**dadurch gekennzeichnet, dass**
die Zahnbreitenmitte der ersten Zahnradpaarung (20) und die Zahnbreitenmitte der zweiten Zahnradpaarung (26) axial zwischen der Radialebene des dritten Lagers (40) und der Radialebene des vierten Lagers (42) angeordnet sind.

6. Vorrichtung zur Phasenverschiebung des Drehwinkels eines Antriebsteils zu einem Abtriebsteil nach Anspruch 4,
**dadurch gekennzeichnet, dass**
alle Kontaktpunkte zwischen den außenverzahnten Zahnrädern (16, 24) und den innenverzahnten Hohlrädern (18, 22) der ersten Zahnradpaarung (20) und der zweiten Zahnradpaarung (26) axial zwischen der Radialebene des dritten Lagers (40) und der Radialebene des vierten Lagers (42) angeordnet sind.

7. Vorrichtung zur Phasenverschiebung des Drehwinkels eines Antriebsteils zu einem Abtriebsteil nach einem der vorangegangenen Ansprüche,
**dadurch gekennzeichnet, dass**
der Außenexzenter (28) zweiteilig ausgeführt ist, wobei ein Innenelement (34) exzentrisch in einem Außenelement (36) angeordnet ist.

8. Vorrichtung zur Phasenverschiebung des Drehwinkels eines Antriebsteils zu einem Abtriebsteil nach Anspruch 7,
**dadurch gekennzeichnet, dass**
radial zwischen dem Innenelement (34) und dem Außenelement (36) ein Federelement (38) angeordnet ist.

9. Vorrichtung zur Phasenverschiebung des Drehwinkels eines Antriebsteils zu einem Abtriebsteil nach Anspruch 8,
**dadurch gekennzeichnet, dass**
das Federelement (38) axial zwischen dem ersten Lager (30) und dem zweiten Lager (32) angeordnet ist.

10. Vorrichtung zur Phasenverschiebung des Drehwinkels eines Antriebsteils zu einem Abtriebsteil nach Anspruch 8,
**dadurch gekennzeichnet, dass**
das Federelement (38) axial zwischen dem dritten Lager (40) und dem vierten Lager (42) angeordnet ist.

11. Vorrichtung zur Phasenverschiebung des Drehwinkels eines Antriebsteils zu einem Abtriebsteil nach einem der vorangegangenen Ansprüche,
**dadurch gekennzeichnet, dass**
der Außenexzenter (28) Aufnahmemittel (52) zur Kopplung eines Aktors aufweist.

12. Vorrichtung zur Phasenverschiebung des Drehwinkels eines Antriebsteils zu einem Abtriebsteil nach einem der vorangegangenen Ansprüche,
**dadurch gekennzeichnet, dass**
das Antriebsteil (2) eine der Nockenwelle (6) zugerichtete erste Gleitfläche (48) aufweist, über die das Antriebsteil (2) auf einem an der Nockenwelle (6) ausgebildeten axial erstreckenden ringförmigen Vorsprung (46) gelagert ist.

13. Vorrichtung zur Phasenverschiebung des Drehwinkels eines Antriebsteils zu einem Abtriebsteil nach einem der vorangegangenen Ansprüche,
**dadurch gekennzeichnet, dass**
das Antriebsteil (2) eine dem Abtriebsteil (4) zugerichtete zweite Gleitfläche (50) aufweist, über die das Antriebsteil (2) auf dem Abtriebsteil (4) gelagert ist.

14. Vorrichtung zur Phasenverschiebung des Drehwinkels eines Antriebsteils zu einem Abtriebsteil nach einem der vorangegangenen Ansprüche,
**dadurch gekennzeichnet, dass**
das Abtriebsteil (4) und das außenverzahnte zweite Zahnrad (24) einteilig hergestellt sind.

15. Vorrichtung zur Phasenverschiebung des Drehwinkels eines Antriebsteils zu einem Abtriebsteil nach einem der vorangegangenen Ansprüche,
**dadurch gekennzeichnet, dass**
das Antriebsteil (2) eine ringförmige Außenwand (10) und eine daran anschließende radial erstreckende Wand (12) aufweist, wobei am inneren radialen Ende der radial erstreckenden Wand (12) das außenverzahnte erste Zahnrad (24) der radial erstreckenden Wand (12) axial gegenüber liegt und das außenverzahnte erste Zahnrad (24) mit dem Antriebsteil (2) formschlüssig verbunden ist.
